(19) Europäisches Patentamt / European Patent Office / Office européen des brevets

(11) **EP 2 037 241 B1**

(12) **FASCICULE DE BREVET EUROPEEN**

(45) Date de publication et mention
de la délivrance du brevet:
**04.11.2009 Bulletin 2009/45**

(51) Int Cl.:
*G01J 1/44* *(2006.01)*      *G01J 5/30* *(2006.01)*

(21) Numéro de dépôt: **08305497.3**

(22) Date de dépôt: **25.08.2008**

(54) **Dispositif de détection d'un rayonnement électromagnétique à limitation de courant**

Vorrichtung zur Erkennung von elektromagnetischer Strahlung unter Strombegrenzung

Device for detecting electromagnetic radiation with current limit

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.09.2007 FR 0757589**

(43) Date de publication de la demande:
**18.03.2009 Bulletin 2009/12**

(73) Titulaire: **COMMISSARIAT A L'ENERGIE ATOMIQUE**
**75015 Paris (FR)**

(72) Inventeurs:
• **ROSTAING, Jean-Pierre**
**38260, LA COTE SAINT ANDRE (FR)**
• **GUELLEC, Fabrice**
**38760, SAINT PAUL DE VARCES (FR)**
• **TCHAGASPANIAN, Michaël**
**38330, SAINT ISMIER (FR)**

(74) Mandataire: **Vuillermoz, Bruno**
**Cabinet Laurent & Charras**
**"Le Contemporain"**
**50, Chemin de la Bruyère**
**69574 Dardilly Cédex (FR)**

(56) Documents cités:
**FR-A- 2 857 545      US-A1- 2003 071 232**

**Description**

**DOMAINE DE L'INVENTION**

L'invention concerne un dispositif de détection d'un rayonnement électromagnétique plus particulièrement destiné à la détection des rayonnements infrarouges, ultraviolets, rayons X et dans le domaine visible.

Ce dispositif met en oeuvre des capteurs sensibles à de tels rayonnements, et s'agissant du domaine infrarouge, met en oeuvre des détecteurs quantiques, c'est-à-dire fonctionnant à très basse température (proche de l'azote liquide), par opposition aux détecteurs infrarouges à température ambiante mettant en oeuvre, quant à eux, des bolomètres.

**ETAT ANTERIEUR DE LA TECHNIQUE**

Dans le domaine de la détection de rayonnements électromagnétiques, il est bien connu d'utiliser des dispositifs agencés sous forme matricielle, c'est-à-dire composés d'une pluralité de capteurs élémentaires juxtaposés de manière à former une matrice présentant un certain nombre de lignes et de colonnes. Les documents FR 2857545 et US 2003/0071232 divulguent des détecteurs du domaine. Les interactions des rayonnements électromagnétiques avec ces capteurs élémentaires, également dénommés "pixels", génèrent des flux de porteurs de charge, dont l'énergie et/ou la quantité correspond à l'énergie des rayonnements incidents. Typiquement, les porteurs de charge sont constitués d'électrons ou de trous de conduction.

Les flux de porteurs de charge s'écoulent vers le circuit de lecture associé au capteur pour former des signaux de nature analogique. Ces signaux sont ensuite traités pour permettre ensuite la reconstruction d'une image visible, fonction de l'éclairement incident.

On réalise ainsi un imageur constitué d'une matrice de pixels sensibles à une gamme de rayonnements électromagnétiques déterminés.

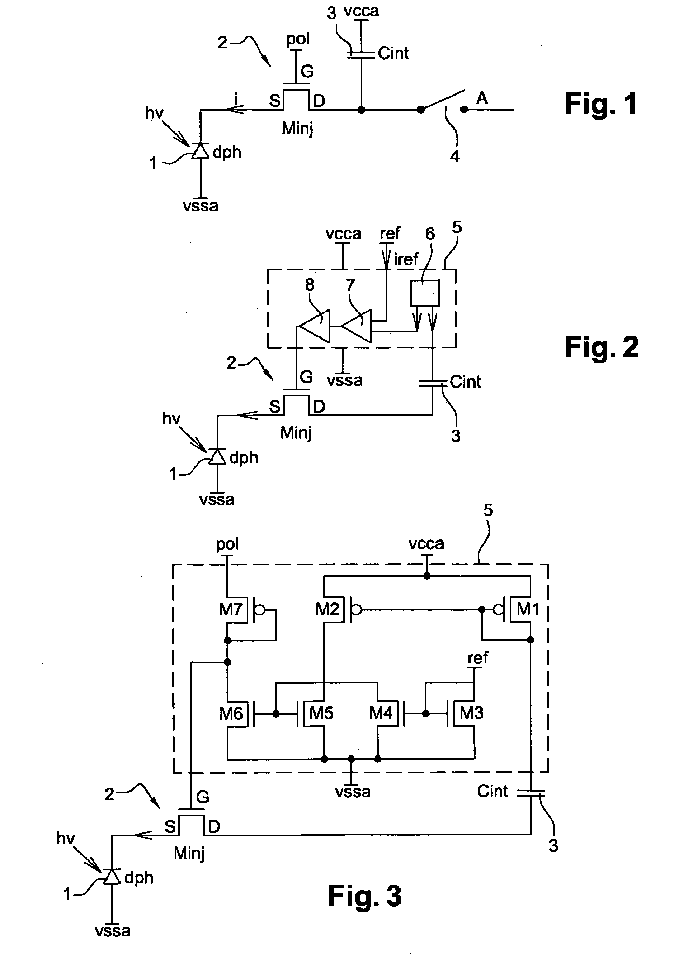

On a représenté en relation avec la figure 1 le circuit de lecture associé à un détecteur élémentaire dans le domaine infrarouge, ledit détecteur étant typiquement constitué d'une photodiode, et mettant en oeuvre un transistor d'injection MOSFET.

En l'espèce, la photodiode dph **1** est soumise à une tension de polarisation par le biais d'une tension appliquée sur la grille G d'un transistor d'injection Minj **2**, en l'espèce constitué d'un MOSFET de type N, connecté à la photodiode dph **1** par sa source S. Le drain D du transistor d'injection **2** est quant à lui relié à une capacité d'intégration Cint **3**.

Lorsque la photodiode **1** est soumise à un rayonnement d'énergie hv et de flux Φ, ledit rayonnement induit la génèse par la photodiode d'un courant i(Φ) qui traverse le transistor d'injection **2** par adaptation de sa tension VGS, ainsi que la capacité d'intégration Cint **3.**

Pendant la durée d'intégration T, le courant i(Φ) charge la capacité Cint en porteurs de charge selon la relation

$$\mathrm{Qint}(\Phi, T) = \int_{0}^{T} i(\Phi).dt .$$

Un interrupteur **4** permet de transférer la charge Qint(Φ,T) de la capacité **3,** par exemple vers un amplificateur destiné à transformer cette charge en tension et ce, de manière connue.

Il est bien évidemment possible d'utiliser un transistor d'injection MOSFET de type P, voire des transistors à effet de champ à jonction (JFET), voire même des transistors bipolaires. Ces différents transistors peuvent être dopés N ou P, voire peuvent être enrichis ou appauvris.

Si le flux de photons incidents est trop intense, le courant généré dans le détecteur élémentaire devient rapidement trop élevé, et l'on observe une dépolarisation de l'ensemble des détecteurs de la matrice. Dans une telle hypothèse, la matrice est alors éblouie et la reconstruction de l'image visible est compromise, voire impossible. En d'autres termes, toute l'image devient noire alors même qu'un seul, voire quelques uns seulement des pixels qui la constituent sont affectés par cet éblouissement.

Afin de pallier ce dysfonctionnement, on a proposé des dispositifs anti-éblouissement basés sur une dérivation du courant excédentaire (selon l'expression anglo-saxonne «*clamping* »), qui cependant n'empêchent pas la saturation propre du détecteur.

L'objet de la présente invention est de proposer un dispositif de détection du type en question, s'affranchissant de ces problèmes d'éblouissement, mais sans intervenir au niveau du détecteur proprement dit, mais davantage au niveau de l'électronique associée audit détecteur, et donc plus particulièrement au niveau du circuit de lecture.

**EXPOSE DE L'INVENTION**

Selon l'invention, on vise un dispositif de détection d'un rayonnement électromagnétique comprenant une matrice de capteurs élémentaires juxtaposés, associés chacun à un substrat commun dans lequel est réalisé un circuit de lecture à adressage séquentiel, propre à chacun des capteurs, l'interaction du rayonnement avec les capteurs générant des charges électriques propres à être converties en tension en vue de leur traitement ultérieur. Chacun des capteurs étant polarisé par le biais d'un transistor d'injection, dont l'une des bornes est reliée à une capacité d'intégration, stockant pendant une phase d'intégration les charges électriques générées par le capteur, et dont la quantité est ensuite traitée en vue de sa conversion en tension.

Selon une caractéristique de l'invention, chacun des pixels de ladite matrice, constitué d'un capteur élémentaire et de son circuit de lecture propre, est associé à un dispositif de limitation de courant, destiné à limiter le courant généré par chacun des capteurs élémentaires à un maximum dénommé courant de référence, quel que soit le flux de rayonnement reçu par le pixel considéré.

En d'autres termes, l'invention consiste non pas à agir au niveau des capteurs élémentaires, mais directement au niveau du circuit de lecture associé, de telle sorte à induire, au niveau du capteur considéré, une variation de tension de polarisation, propre à diminuer, le cas échéant, la sensibilité du détecteur pour un flux trop important du rayonnement détecté.

Selon l'invention, le dispositif de limitation de courant reçoit deux signaux d'entrée, respectivement la mesure du courant du détecteur et le courant de référence, et émet un signal de sortie, constituée par une grandeur physique apte à contrôler le transistor d'injection.

Selon l'invention, ce dispositif de limitation de courant est constitué au moins :

-   d'un comparateur de courant, destiné à comparer le courant du capteur chargeant la capacité d'intégration avec la valeur de référence,
-   et d'un circuit de modification de la tension de grille du transistor d'injection en fonction de la comparaison ainsi réalisée.

Selon l'invention, ce dispositif de limitation de courant est monté en contre-réaction par rapport au circuit de polarisation du capteur élémentaire. En raison de son montage en contre-réaction, le système s'équilibre tout seul sans intervention. En effet, en raison de cette contre-réaction, on dispose d'un système asservi et stable : une augmentation du signal de sortie provoque une diminution du stimulus d'entrée. Le courant de référence est adaptable par une source de courant $i_{ref}$, intervenant au niveau du comparateur. La valeur de ce courant est choisie en fonction de la valeur du flux à détecter, de la sensibilité, et de la nature du détecteur.

Avantageusement, le courant du capteur est dupliqué au moyen d'un miroir de courant connecté à l'entrée d'un comparateur de courant, l'autre entrée dudit comparateur recevant le courant de référence $i_{ref}$, ledit comparateur effectuant une sommation entre le courant dupliqué et le courant de référence, le courant résultant de cette sommation étant à son tour amplifié et transformé en tension de polarisation par le biais du transistor d'injection.

## DESCRIPTION SOMMAIRE DES FIGURES

La manière dont l'invention peut être réalisée et les avantages qui en découlent ressortiront mieux de l'exemple de réalisation qui suit, donné à titre indicatif et non limitatif, à l'appui des figures annexées.

La figure 1, comme déjà dit, est une représentation schématique du circuit de lecture d'un capteur élémentaire d'un détecteur conforme à l'art antérieur.

La figure 2 est une représentation schématique illustrant le principe de fonctionnement du limiteur de courant conforme à l'invention.

La figure 3 est une représentation schématique illustrant un mode de réalisation possible du limiteur de courant de l'invention, mettant en oeuvre la technologie microélectronique CMOS.

La figure 4 est un ensemble de graphiques illustrant la variation de courant et de tension aux bornes de certains des composants d'un capteur élémentaire ou de son circuit de lecture associé, mettant en exergue l'action du limiteur de courant conformément à l'invention.

## DESCRIPTION DETAILLEE DE L'INVENTION

On a donc illustré en relation avec la figure 2 le principe général de dispositif de détection conformément à l'invention.

Dans la suite de la description, il est davantage décrit un détecteur à infrarouges, mettant en oeuvre des photodiodes. Il est cependant bien entendu que l'homme du métier est à même de modifier les composants nécessaires pour adapter lesdits composants à la nature du rayonnement à détecter, notamment rayons X, domaine visible, ultraviolets.

En l'espèce, il est mis en oeuvre une photodiode **1** de même nature et de même caractéristique que celle décrite en relation avec la figure 1.

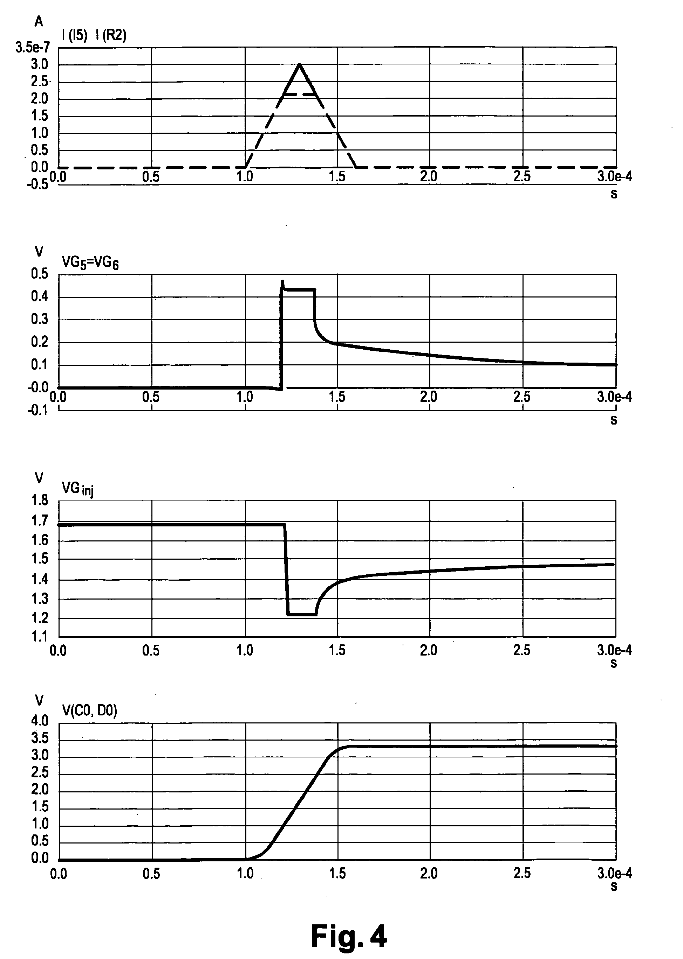

Comme on le voit, le limiteur de courant **5** conforme à l'invention est monté en contre-réaction sur la grille G du transistor d'injection **2**. A cet effet, il comporte tout d'abord un miroir de courant **6** constitué (cf. figure 4) d'un transistor M1 et d'un transistor M2 pour lequel il est choisi, à titre non limitatif, des rapports de courant égaux à 1.

Les miroirs de courant sont bien connus de l'homme du métier, de sorte qu'il n'y a pas lieu de les décrire ici plus en détail. Il convient simplement de rappeler qu'un tel miroir de courant est un circuit particulier, en l'espèce conçu de deux transistors, permettant de refléter (dupliquer) le courant initial, en l'espèce issu de la capacité d'intégration **3,** en un courant de sortie, en l'espèce égal, et en tout cas proportionnel au courant incident, indépendamment de la charge connectée au courant de sortie, et dans le cas présent au comparateur **7** décrit ci-après plus en détail.

En d'autres termes, le courant dans le transistor M2 est l'image du courant i(Cint), de sorte qu'on a la relation :

$$ids(M2) = ids(M1) = i(Cint).$$

Selon l'invention, on injecte un courant de référence $i_{ref}$ au moyen d'une source de courant (non représentée), et pour ce faire, on utilise également un miroir de courant constitué de deux transistors M3 et M4 tel qu'on peut mieux l'observer sur la figure 3. Ainsi, le courant dans le transistor M4 est l'image du transistor M3 avec lequel il forme le miroir de courant.

Bien évidemment, pour un dispositif plus simple, un tel miroir de courant n'est pas indispensable. Ainsi, le courant de référence peut directement être appliqué sur le drain du transistor M5, décrit ci-après.

Avantageusement, le transistor M3 peut être commun à plusieurs pixels et donc placé à l'extérieur du pixel considéré, en ressource partagée.

Le comparateur de courant 7 est en l'espèce constitué du transistor M5 (figure 3) qui somme le courant entrant ids(M2) correspondant, comme déjà dit, au courant issu de la capacité d'intégration 3, et le courant sortant ids(M4) correspondant au courant de référence, d'où l'on obtient la relation :

$$ids(M5) = ids(M2) - ids(M4) = ids(Cint) - iref$$

Ce faisant, si le courant issu du transistor M2 est supérieur au courant issu du transistor M4, c'est-à-dire si le courant issu de la capacité d'intégration **3** est supérieur au courant de consigne ou de référence iref, alors le courant dans M5 est positif. Dans le cas contraire, le courant dans M5 est nul, le courant iref de référence constitue donc un seuil.

Un nouveau miroir de courant, constitué en l'espèce des transistors M5 et M6, assure la duplication du courant résultant du transistor M5.

Un amplificateur constitué par le transistor M7, dont la source est reliée à la tension de polarisation, est traversé par le courant issu du miroir de courant M6 M5 et génère une tension appliquée sur la grille G du transistor d'injection **2** selon la relation :

$$V(G) = V(pol)-(1/GM7).ids(M7) = V(pol)-(R7).ids(M7).$$

En final, V(G) = V(pol)-(R7).(ids(Cint)-iref)).

Ce faisant, si le courant issu de la capacité d'intégration **3** dépasse la valeur de courant de seuil iref, alors il est limité à cette seule valeur. Si en revanche ce courant est inférieur au courant de seuil, aucune modification de la tension de polarisation n'intervient au niveau de la grille G du transistor d'injection **2**.

Il peut être remarqué que lorsque la capacité d'intégration est remplie ou saturée, le potentiel de drain du transistor d'injection **2** descend jusqu'à Vds = 0. Le transistor se trouve alors en mode bloqué et empêche le courant de passer : la capacité d'intégration 3 ne prend plus de charge.

Dans un exemple particulier d'application, les dimensions des différents transistors MOSFET du dispositif de limitation de courant pour une technologie de 0.5 $\mu$m peuvent par exemple être, exprimées en $\mu$m :

$$Minj = 3/1 \; ; \; M1 \; à \; M6 : 1/1 \; ; \; M7 : 1/5$$

$$W/L = 3/1 \text{ pour Minj}$$

$$W/L = 1/1 \text{ pour M4 à M6}$$

$$W/L = 1/5 \text{ pour M7}$$

Il résulte du montage qui précède, un effet de contre réaction sur la grille G du transistor d'injection **2.** Ce faisant, deux états sont alors possibles :

- ■ en deçà de la valeur du courant de référence, la contre réaction est inactive : le circuit de lecture respecte alors l'intégrité du courant produit par le flux photonique ;
- ■ au delà de la valeur du courant de référence, une variation de courant dans la capacité d'intégration induit une variation de potentiel sur la grille du transistor d'injection **2,** cette variation induisant à son tour une variation de même sens de la tension de polarisation du détecteur, ce qui tend à faire diminuer la courant du détecteur ainsi que le courant admissible à la valeur du courant de référence.

On a représenté en relation avec la figure 4 la traduction sous la forme de courbes de l'intervention du limiteur de courant conforme à l'invention.

Ainsi la première courbe illustre la variation de l'intensité résultant du flux photonique à l'entrée du circuit, c'est-à-dire le courant résultant des porteurs de charge générés par la photodiode.

Plus précisément, on a représenté une telle variation avec une photodiode témoin, non connectée au circuit de lecture et la même variation avec une photodiode associée au circuit de lecture conforme à l'invention.

On observe ainsi que pour un courant de seuil fixé à 200 nA, il y a superposition des courbes respectives entre le courant témoin du flux photonique et le courant traversant la photodiode. En revanche, au-delà il y a limitation du courant générée par la photodiode à cette valeur (traits discontinus).

La courbe suivante illustre la variation de la tension de grille du transistor M6. On peut relever que lorsque le courant de référence est atteint, cette tension augmente brusquement puisque le courant dupliqué a juste dépassé le courant de référence.

La troisième courbe illustre la variation de la tension de grille du transistor d'injection. On observe ainsi que lorsque le courant de seuil est dépassé, la tension de polarisation est diminuée afin de réduire la polarisation de la photodiode considérée.

La dernière courbe illustre la variation de la tension aux bornes de la capacité d'intégration **3.** On constate que la tension est mesurée même lorsque le seuil est atteint. Il n'y a pas arrêt du fonctionnement du pixel.

L'invention présente différents avantages.

En premier lieu, on peut noter que par ce dispositif, on s'affranchit des problèmes de dépolarisation des détecteurs en mettant en oeuvre une solution électronique, en l'absence de toute intervention directe au niveau des capteurs élémentaires. Ainsi, on s'affranchit des problèmes d'éblouissement tels que par exemple l'attaque d'un détecteur infrarouge par un signal laser, par définition particulièrement focalisé.

On peut également souligner le fait que même avec la présence du dispositif de l'invention, on ne dégrade pas la mesure du détecteur en dessous du seuil.

De plus, on ne perd en effet l'information que pour le pixel considéré ayant subi l'éblouissement, et non pas sur toute la matrice.

## Revendications

1. Dispositif de détection d'un rayonnement électromagnétique comprenant une matrice de capteurs élémentaires juxtaposés (1), associés chacun à un substrat commun dans lequel est réalisé un circuit de lecture à adressage séquentiel, propre à chacun des capteurs, constituant ainsi autant de pixels, l'interaction du rayonnement avec les capteurs générant des charges électriques destinées à être converties en tension en vue de leur traitement ultérieur, chacun desdits capteurs étant polarisé par le biais d'un transistor d'injection (2), dont l'une des bornes est reliée à une capacité d'intégration (3), stockant pendant une phase d'intégration les charges électriques générées par le capteur, et dont la quantité de charges est ensuite traitée en vue de sa conversion en tension, *caractérisé* **en ce que** chacun des pixels de ladite matrice est associé à un dispositif de limitation de courant (5), destiné à limiter le courant généré par chacun des capteurs élémentaires à un maximum dénommé courant de référence, quel que soit le flux de rayonnement reçu par le pixel considéré.

2. Dispositif de détection d'un rayonnement électromagnétique selon la revendication 1, *caractérisé en ce que* le dispositif de limitation de courant (5) reçoit deux signaux d'entrée, respectivement la mesure du courant du détecteur et le courant de référence, et **en ce qu'**il émet un signal de sortie, constituée par une grandeur physique apte à contrôler le transistor d'injection (2).

3. Dispositif de détection d'un rayonnement électromagnétique selon l'une des revendications 1 et 2, *caractérisé en ce que* le dispositif de limitation de courant (5) est monté en contre-réaction par rapport au circuit de polarisation du capteur élémentaire.

4. Dispositif de détection d'un rayonnement électromagnétique selon l'une des revendications 1 à 3, *caractérisé en ce que* le dispositif de limitation de courant (5) comprend au moins :

   - un comparateur de courant (7), destiné à comparer le courant du capteur chargeant la capacité d'intégration (3) avec la valeur de référence,
   - et un circuit (8) de modification de la tension de grille du transistor d'injection (2) en fonction de la comparaison ainsi réalisée.

5. Dispositif de détection d'un rayonnement électromagnétique selon la revendication 4, *caractérisé en ce que* le courant du capteur est dupliqué au moyen d'un miroir de courant (6 ; M1, M2), connecté à l'entrée du comparateur de courant (7, M5), l'autre entrée dudit comparateur recevant le courant de référence $i_{ref}$, ledit comparateur effectuant une sommation entre le courant dupliqué et le courant de référence, dont le résultat est à son tour amplifié et transformé en tension de polarisation par le biais du transistor d'injection.

**Claims**

1. Device for detecting an electromagnetic radiation, comprising a matrix of juxtaposed elementary sensors (1), each associated with a common substrate in which a sequential addressing read circuit is prepared, specific to each of the sensors, thereby constituting as many pixels, the interaction of the radiation with the sensors generating electric charges to be converted to voltage for their subsequent processing, each of the said sensors being biased via an injection transistor (2), of which one of the terminals is connected to an integration capacitance (3), storing the electric charges generated by the sensor during an integration phase, and whereof the quantity of charges is then processed for conversion to voltage, *characterized in that* each of the pixels of said matrix is associated with a current limiting device (5), for limiting the current generated by each of the elementary sensors to a maximum called reference current, regardless of the radiation flux received by the pixel concerned.

2. Device for detecting an electromagnetic radiation according to Claim 1, *characterized in that* the current limiting device (5) receives two input signals, the measurement of the detector current and the reference current respectively, and **in that** it transmits an output signal, consisting of a physical quantity suitable for controlling the injection transistor (2).

3. Device for detecting an electromagnetic radiation according to either of Claims 1 and 2, *characterized in that* the current limiting device (5) is mounted in feedback with regard to the bias circuit of the elementary sensor.

4. Device for detecting an electromagnetic radiation according to one of Claims 1 to 3, *characterized in that* the current limiting device (5) comprises at least:

   - a current comparator (7), for comparing the current of the sensor charging the integration capacitance (3) with the reference value,
   - and a circuit (8) for modifying the grid voltage of the injection transistor (2) according to the comparison thus made.

5. Device for detecting an electromagnetic radiation according to Claim 4, *characterized in that* the sensor current is duplicated by means of a current mirror (6; M1, M2), connected to the input of the current comparator (7, M5), the other input of the said comparator receiving the reference current $i_{ref}$, the said comparator making a summation between the duplicated current and the reference current, of which the result is in turn amplified and converted to bias voltage via the injection transistor.

**Patentansprüche**

1. Vorrichtung zur Erfassung einer elektromagnetischen Strahlung, eine Anordnung von nebeneinanderliegenden Elementarsensoren (1) aufweisend, die jeweils einem gemeinsamen Substrat zugeordnet sind, in dem eine jedem der Sensoren eigene, also so viele Pixel bildende, sequentiell adressierbare Abtastungsschaltung ausgebildet ist, wobei die Wechselwirkung der Strahlung mit den Sensoren elektrische Ladungen erzeugt, die dazu bestimmt sind, im Hinblick auf ihre Weiterverarbeitung in Spannung umgesetzt zu werden, wobei jeder der Sensoren durch einen Injektionstransistor (2) polarisiert wird, von dem eine der Klemmen mit einem Integrationskondensator (3) verbunden ist, der während einer Integrationsphase die vom Sensor erzeugten elektrischen Ladungen speichert, und dessen Ladungsmenge dann im Hinblick auf ihre Umsetzung in Spannung verarbeitet wird, **dadurch gekennzeichnet, dass** jedes der Pixel der Anordnung einer Strombegrenzungsvorrichtung (5) zugeordnet ist, die dazu bestimmt ist, den von jedem der Elementarsensoren erzeugten Strom auf ein Referenzstrom genanntes Maximum zu begrenzen, wie auch immer der von dem betreffenden Pixel aufgenommene Strahlungsfluss sein mag.

2. Vorrichtung nach Anspruch 1, zur Erfassung einer elektromagnetischen Strahlung, **dadurch gekennzeichnet, dass** die Strombegrenzungsvorrichtung (5) zwei Eingangssignale, den Messwert des Stroms des Messfühlers bzw. den Referenzstrom empfängt, und dass sie ein Ausgangssignal abgibt, das eine physikalische Größe darstellt, die geeignet ist, den Injektionstransistor (2) zu steuern.

3. Vorrichtung nach einem der Ansprüche 1 und 2, zur Erfassung einer elektromagnetischen Strahlung, **dadurch gekennzeichnet, dass** die Strombegrenzungsvorrichtung (5) in Bezug auf die Polarisierungsschaltung des Elementarsensors in Rückkopplung geschaltet ist.

4. Vorrichtung nach einem der Ansprüche 1 bis 3, zur Erfassung einer elektromagnetischen Strahlung, **dadurch gekennzeichnet, dass** die Strombegrenzungsvorrichtung (5) mindestens aufweist:

   - einen Stromvergleicher (7), der dazu bestimmt ist, den Strom des den Integrationskondensator (3) ladenden Sensors mit dem Referenzwert zu vergleichen,
   - und eine Schaltung (8) zum Ändern der Gitterspannung des Injektionstransistors (2) in Abhängigkeit von dem auf diese Weise realisierten Vergleich.

5. Vorrichtung nach Anspruch 4, zur Erfassung einer elektromagnetischen Strahlung, **dadurch gekennzeichnet, dass** der Strom des Sensors mittels eines Stromspiegels (6; M1, M2) dupliziert wird, der am Eingang des Stromvergleichers (7, M5) angeschlossen ist, wobei der andere Eingang des Vergleichers den Referenzstrom $i_{ref}$ aufnimmt, wobei der Vergleicher eine Summenbildung zwischen dem duplizierten Strom und dem Referenzstrom vornimmt, deren Ergebnis durch den Injektionstransistor wiederum verstärkt und in Polarisationsspannung umgesetzt wird.

**Fig. 1**

**Fig. 2**

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2857545

- US 20030071232 A